# EUROPEAN PATENT APPLICATION

(11) **EP 1 920 666 A1**
(43) Date of publication of application: **14.05.2008**
(21) Application number: 05781526.8
(22) Date of filing: 31.08.2005
(51) Int. Cl.: A23L 1/238

(54) **PROCESS FOR PRODUCING SOY SAUCE HAVING REDUCED INFECTIOUS MICROBE-ORIGIN SMELL**

(71) Applicant: Sakaue, Ryoichi, Kikkoman Corporation, Noda-shi, Chiba 278-8601 (JP)
(72) Inventor: NAKATOH, Akinori, Noda-shi, Chiba 278-8601 (JP); SASAKI, Tsutomu, Noda-shi, Chiba 278-8601 (JP); MAEDA, Tomohiro, Noda-shi, Chiba 278-8601 (JP); HIGUCHI, Takeshi, Noda-shi, Chiba 278-8601 (JP); TSUJI, Ryohei, Noda-shi, Chiba 278-8601 (JP); NUNOMURA, Nobutake, Noda-shi, Chiba 278-8601 (JP)
(74) Representative: Denison, Christopher Marcus
(86) International application number: PCT/JP2005/015925
(87) International publication number: WO 2007/026427

(57) **Abstract**

The present invention relates to a process for producing a soy sauce *koji* having a reduced *Busho-shu* which is one of the unpleasant smells of soy sauce, and a soy sauce *koji* having a reduced *Busho-shu* obtained by this production process. Specifically, the process for producing a soy sauce *koji* is **characterized by** using a combination of a *koji* mold having a high isobutyric acid productivity and another *koji* mold having a low isobutyric acid productivity. The present invention also relates to a process for producing a soy sauce having a reduced *Busho-shu* and a soy sauce obtained by this production process.

## Description

### Technical Field

The present invention relates to a process for producing a soy sauce *koji* having a reduced *Busho-shu* which is one of the unpleasant smells of soy sauce, and a soy sauce *koji* having a reduced *Busho-shu* obtained by this production process. The present invention also relates to a process for producing a soy sauce having a reduced *Busho-shu* and a soy sauce obtained by this production process.

### Background Art

In the production of soy sauce, firstly steam-cooked soybeans (or defatted soybeans) and roasted and milled wheat in approximate quarters are mixed to obtain a raw material of soy sauce *koji,* which is then added and mixed with a seed *koji* mold belonging to the genus *Aspergillus* (such as *Aspergillus oryzae* and *Aspergillus sojae*). The mixture is cultured for 3 to 4 days under a controlled temperature in a *koji*-making room to obtain a soy sauce *koji.* Next, this soy sauce *koji* and a salt water are mixed to obtain a soy sauce moromi mash, which is then placed in a tank for incubation. This soy sauce moromi mash is occasionally stirred to effect fermentation and aging to obtain an aged moromi mash. This aged moromi mash is wrapped in a nylon filter cloth and press-filtered by a squeezer to obtain a raw soy sauce (a filtrate of aged mash). This raw soy sauce is subjected to pasteurization, clarification, and sediment-removal to obtain a soy sauce (Hakko Handobukku (Fermentation Handbook), edited by Shinrokuro TOCHIKURA et al., Kyoritsu Shuppan Co. Ltd, 2001, pp. 588-592).

Moreover, a soy sauce is produced by the action of many microorganisms such as *koji* molds (*Aspergillus oryzae* and *Aspergillus sojae*), salt tolerant lactic acid bacteria (*Tetragenococcus halophilus*), salt tolerant main fermentation yeast (*Zygosaccharomyces rouxii*), and salt tolerant after-ripening yeast (*Candida versatilis* and *Candida etchellsii*) *(*Hakko Handobukku (Fermentation Handbook), edited by Shinrokuro TOCHIKURA *et al.,* as mentioned above).

Incidentally, soy sauce aroma is very complex and delicately different depending on the formula of raw material, *koji* mold, management of *koji*-making, lactic acid bacterium and yeast related to fermentation, intensity of fermentation, and the like. It is also known that the taste is differently felt depending on this aroma (Nobuo SAITO, Jokyo, Vol. 89, No. 7, pp. 498-500 (1994)). As to this soy sauce aroma, the existence of aroma components which are said to be related to the palatability and the freshness, namely furanones such as 4-hydroxy-2(or 5)-ethyl-5(or 2)-methyl-3(2H)-furanone (hereunder, referred to as HEMF), alcohols such as 4-ethylguaiacol (4EG), 4-ethylphenol (4EP), methionol, isobutyl alcohol, and ethanol, esters such as ethyl acetate and ethyl lactate, phenols, and sulfur-containing compounds, and conversely the existence of components for *Busho-shu* (natto-like odor compounds) which are unfavorable for soy sauce aroma and greatly spoil the quality, namely isobutyric acid and isovaleric acid are known (Tadanobu NAKADAI, Shoyu no Kenkyu to Gijutsu (Research and Technology of Soy Sauce), Vol. 31, No. 4, pp. 223-233 (2005)).

Meanwhile, since soy sauce is a seasoning based on the umami taste of amino acid, it is important in the production of soy sauce to increase the production amount of amino acid and the production amount of glutamic acid by increasing the utilization rate of nitrogen. Therefore, it is very important in the production of soy sauce to breed, search, and use *koji* molds that are capable of yielding strong protease and glutaminase and capable of producing a highly digestible *koji.* Conventionally, by such reasons, it has been considered to produce a soy sauce *koji* (hereunder, also referred to as "*koji-*making") by using a specific *koji* mold which secretes a strong protease for a soy sauce *koji.*

As mentioned above, a process for producing a soy sauce *koji* which produce large amounts of amino acid and glutamic acid so as to produce a soy sauce having an excellent aroma and umami taste, has been desired.

### Disclosure of the Invention

In order to produce excellent soy sauce *koji, koji* molds which produce a strong protease and provide a highly digestible *koji* have been developed. However, the use of such *koji* molds involves a risk in which a high concentration of a component for *Busho-shu* which is one of the unpleasant smells of soy sauce, namely isobutyric acid, accumulates in the raw material of soy sauce *koji* after 20 to 30 hours from the start of *koji*-making. This component for *Busho-shu* is generally metabolized (degraded) during the *koji*-making and hardly remains in the incubated *koji (de-koji).* However, in some cases depending on the *koji* mold strain, this component may not be sufficiently metabolized during the *koji*-making and remains as it is in the incubated *koji* (*de-koji*), resulting in that the smell is subsequently transferred to soy sauce products and negatively affects the soy sauce quality, in particular the aroma thereof.

Therefore, it is an objective of the present invention to produce a soy sauce *koji* having a reduced *Busho-shu* which is one of the unpleasant smells of soy sauce, and a soy sauce *koji* having a reduced *Busho-shu* using the *koji.*

The inventors of the present invention have conducted intensive studies to solve the above problems. As a result, they have found that, in the *koji*-making by the inoculation of a *koji* mold having a high isobutyric acid productivity which belongs to the genus *Aspergillus* and a *koji* mold having a low isobutyric acid productivity which belongs to the genus *Aspergillus* into a same raw material of soy sauce *koji,* the *koji* mold having a low isobutyric acid productivity metabolizes isobutyric acid that has been produced and accumulated by the *koji* mold having a high isobutyric acid productivity, so as to provide a soy sauce *koji* having less *Busho-shu.* Also, they have found that the production of a soy sauce using this soy sauce *koji* provides a soy sauce having less *Busho-shu.* These findings have led to the completion of the present invention.

That is to say, the present invention relates to a process for producing a soy sauce *koji* having a reduced *Busho-shu,* wherein *koji*-making is performed by inoculating a seed *koji* mold belonging to the genus *Aspergillus* which produces a high concentration of isobutyric acid during the *koji*-making and a seed *koji* mold belonging to the genus *Aspergillus* which does not produce, or produces a low concentration of isobutyric acid during the *koji*-making, into a same raw material of soy sauce *koji.*

The *koji* mold belonging to the genus *Aspergillus* which produces a high concentration of isobutyric acid during *koji*-making is preferably a *koji* mold which produces isobutyric acid at a double amount or more after 24 or 30 hours from the start of *koji*-making, as compared with the amount of isobutyric acid produced after 20 hours from the start of the *koji*-making. For example, the *koji* mold belonging to the genus *Aspergillus* which produces a high concentration of isobutyric acid during *koji*-making is a *koji* mold which produces 40 ppm or more of isobutyric acid after 24 or 30 hours from the start of the *koji*-making, when *koji*-making is performed under the following condition (A):

### Koji-making condition (A):

26 g of defatted soybeans is sprayed with 135 W/W% water. 28 g of wheat is roasted and milled, and the resultant is mixed with the thus obtained soybeans. The mixture is then put into a 2 liter Fernbach flask, followed by sterilization under pressure and heating at 121°C for 50 minutes. The resultant product is cooled down to a room temperature, and inoculated with 100 mg of bran seed *koji.* The flask is cotton-plugged and then is incubated in a thermostatic chamber at a room temperature of 30°C to start *koji*-making. After 16 hours, the Fernbach flask is shaken so as to remove the heat generated in the *koji* (mixing process called *"Teire"),* and then is transferred into a thermostatic chamber at a room temperature of 25°C. After 8 hours, the *"Teire"* is performed again to remove the heat generated in the *koji,* and then is transferred into a thermostatic chamber at a room temperature of 20°C. The *koji*-making is performed for 42 hours in total to obtain a *koji.*

There is no limitation in the above *koji* mold belonging to the genus *Aspergillus* which produces a high concentration of isobutyric acid during *koji*-making, although *Aspergillus sojae,* and preferably *Aspergillus sojae* strain ATCC 46250, can be used.

On the other hand, the *koji* mold belonging to the genus *Aspergillus* which does not produce, or produces a low concentration of isobutyric acid during *koji*-making is preferably a *koji* mold which produces isobutyric acid at a reduced amount, or no isobutyric acid at all, after 24 or 30 hours from the start of *koji*-making, as compared with the amount of isobutyric acid produced after 20 hours from the start of the *koji*-making. For example, the *koji* mold belonging to the genus *Aspergillus* which does not produce, or produces a low concentration of isobutyric acid during *koji*-making is a *koji* mold which produces 20 ppm or less of isobutyric acid after 24 or 30 hours from the start of the *koji*-making, when a *koji*-making is performed under said condition (A).

There is no limitation in the above *koji* mold belonging to the genus *Aspergillus* which does not produce, or produces a low concentration of isobutyric acid during *koji*-making, although *Aspergillus oryzae,* and preferably *Aspergillus oryzae* strain ATCC 22787, can be used.

Moreover, the present invention relates to a soy sauce *koji* produced by any one of abovementioned processes and having a reduced *Busho-shu.*

Furthermore, the present invention relates to a process for producing a soy sauce having a reduced *Busho-shu,* wherein a soy sauce *koji* produced by any one of abovementioned processes is mixed with a salt water to produce a soy sauce moromi mash, followed by fermentation and aging.

The present invention also relates to a soy sauce produced by the abovementioned process and having a reduced *Busho-shu.*

According to the present invention, a soy sauce *koji* and a soy sauce having reduced *Busho-shu* can be reliably produced. Moreover, a soy sauce having an extremely high content of glutamic acid and an excellent aroma can be produced at a high nitrogen utilization rate.

### Brief Description of the Drawings

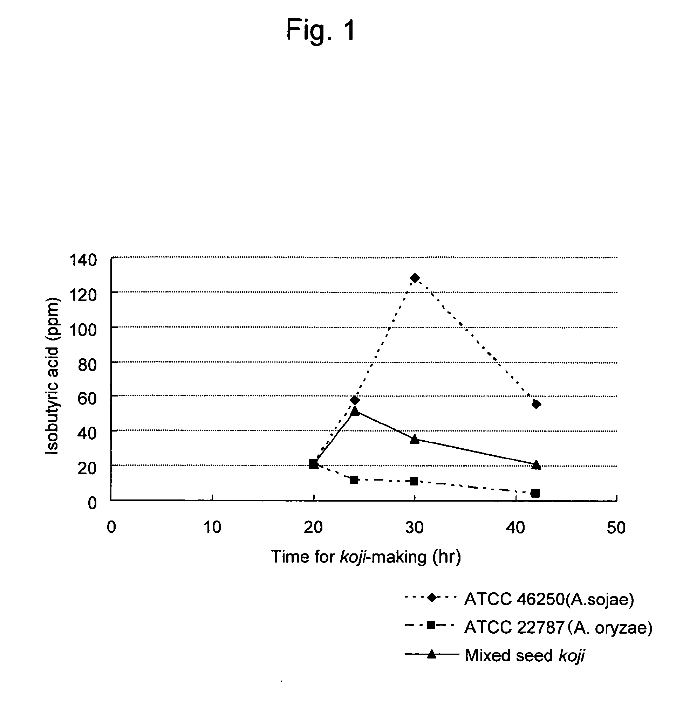

Fig. 1 shows the results of isobutyric acid contents (ppm) in *koji* over time in the course of *koji*-making using *Aspergillus sojae* strain ATCC 46250, *Aspergillus oryzae* strain ATCC 22787, and a mixture of these two types of strains.

### Best Mode for Carrying Out the Invention

Hereafter, the present invention will be described in detail.

The present invention relates to a process for producing a soy sauce *koji* and a soy sauce having reduced *Busho-shu.* For the soy sauce *koji,* soybeans are used as a protein raw material and wheat is used as a starch raw material. The production thereof is carried out by mixing soaked and steam-cooked soybeans, roasted and milled wheat, and a seed *koji,* followed by *koji*-making. The present invention is characterized by using *koji* molds having different isobutyric acid productivities as a seed *koji* in the course of *koji*-making so that the isobutyric acid content in the soy sauce *koji* is reduced so as to reduce a *Busho-shu* in the *koji.*

Specifically, a *koji* mold belonging to the genus *Aspergillus* which produces a high concentration of isobutyric acid during *koji*-making (hereunder, also referred to as *"koji* mold having a high isobutyric acid productivity") and a *koji* mold belonging to the genus *Aspergillus* which does not produce, or produces a low concentration of isobutyric acid (hereunder, also referred to as "*koji* mold having a low isobutyric acid productivity") are used as a seed *koji* in the course of *koji*-making. Here, the term *"koji* mold having a high isobutyric acid productivity" refers to a *koji* mold which produces isobutyric acid at a high concentration to a degree that a *Busho-shu* is detectable from a soy sauce *koji* when produced using this *koji* mold. Specifically, it refers to a *koji* mold which produces isobutyric acid at a double amount or more, and more preferably a triple amount or more, after 24 or 30 hours from the start of *koji*-making, as compared with the amount of isobutyric acid produced after about 20 hours from the start of the *koji*-making. More specifically, it is a *koji* mold which produces 40 ppm or more of isobutyric acid within about 24 to 42 hours from the start of *koji*-making, for example, after 24 or 30 hours therefrom.

### Koji-making condition (A):

26 g of defatted soybeans is sprayed with 135 W/W% water. 28 g of wheat is roasted and milled, and the resultant is mixed with the thus obtained soybeans. The mixture is then put into a 2 liter Fernbach flask, followed by sterilization under pressure and heating at 121 °C for 50 minutes. The resultant product is cooled down to a room temperature, and inoculated with 100 mg of bran seed *koji.* The flask is cotton-plugged and then is incubated in a thermostatic chamber at a room temperature of 30°C to start *koji*-making. After 16 hours, the Fernbach flask is shaken so as to remove the heat generated in the *koji* (mixing process called *"Teire"),* and then is transferred into a thermostatic chamber at a room temperature of 25°C. After 8 hours, the *"Teire"* is performed again shaken to remove the heat generated in the *koji,* and then is transferred into a thermostatic chamber at a room temperature of 20°C. The *koji*-making is performed for 42 hours in total to obtain a *koji.*

### Process for preparing bran seed koji:

20 g of bran is sprayed with 80 W/W% water. 5 g of the above product is put into a 150 ml conical flask, followed by sterilization under pressure and heating at 121°C for 50 minutes. The resultant product is cooled down to a room temperature, and inoculated with 2 to 3 scoops of a platinum loop with a *koji* mold which has been previously pure-cultured and isolated. The flask is incubated in a thermostatic chamber at a temperature of 30°C for 72 hours.

On the other hand, the term "*koji* mold having a low isobutyric acid productivity" refers to a *koji* mold which does not produce, or produces isobutyric acid at a low concentration to a degree that a *Busho-shu* is undetectable from a soy sauce *koji* when produced using this *koji* mold. Specifically, it refers to a *koji* mold which produces isobutyric acid at a reduced amount after 24 or 30 hours from the start of *koji*-making, as compared with the amount of isobutyric acid produced after about 20 hours from the start of the *koji*-making, or a *koji* mold which does not produce isobutyric acid at all in the course of *koji*-making. More specifically, it is a *koji* mold which produces 20 ppm or less of isobutyric acid within about 24 to 42 hours from the start of *koji*-making, for example, after 24 or 30 hours therefrom.

*Koji* molds having the abovementioned properties can be readily obtained by preparing *koji* molds belonging to the genus *Aspergillus,* followed by *koji*-making according to a normal *koji*-making condition, preferably the above *koji*-making condition (A), measuring the amount of isobutyric acid in the *koji,* and selecting a strain which produces a large or small amount of isobutyric acid.

*Koji* molds belonging to the genus *Aspergillus* to be prepared are not specifically limited, although *Aspergillus oryzae* or *Aspergillus sojae* is preferred considering that these molds are used for the production of soy sauce *koji.*

The isobutyric acid content in *koji* or soy sauce can be measured by using any publicly known method. For example, 25g of soy sauce *koji* is added with 40 ml of saturated salt water, which is well shaken and left at a room temperature for 24 hours. Then, the resultant product is filtered with a filter paper. Thus obtained filtrate (soy sauce *koji* extract) is extracted with methyl acetate, and is subjected to the analysis by gas chromatography (GC) method without a concentration process. Moreover, soy sauce is directly extracted as it is with methyl acetate, and is subjected to the analysis by gas chromatography (GC) method without a concentration process (see "Analysis of Aroma Components by Gas Chromatography" edited and written by THE JAPAN SOY SAUCE INSPECTION INSTITUTE, Association of Experimental Method for Soy Sauce, issued on Mar 1, 1985, pp. 177 to 179).

As to the *koji* mold having a high isobutyric acid productivity, for example, *Aspergillus sojae* strain, preferably *Aspergillus sojae* strain ATCC 46250 which has been confirmed to produce 60 ppm or more of isobutyric acid during *koji*-making when the *koji*-making is performed under the abovementioned condition (A), can be used. This strain ATCC 46250 is deposited to the American Type Culture Collection, and is readily available. Moreover, this *Aspergillus sojae* strain ATCC 46250 is capable of producing a highly digestible soy sauce *koji* having a high protease activity and a high glutamic acid content, which is thus particularly preferably used in the present invention.

Moreover, as to the *koji* mold having a low isobutyric acid productivity, for example, *Aspergillus oryzae* strain, preferably *Aspergillus oryzae* strain ATCC 22787 which has been confirmed to produce 10 ppm or less of isobutyric acid during *koji*-making when the *koji*-making is performed under the abovementioned condition (A), can be used. This strain ATCC 22787 is also deposited to the American Type Culture Collection, and is readily available.

In the present invention, a plurality of types of *koji* molds can be employed so long as a *koji* mold having a high isobutyric acid productivity and a *koji* mold having a low isobutyric acid productivity are used. For example, one type of *koji* mold having a high isobutyric acid productivity and one type of *koji* mold having a low isobutyric acid productivity may be employed. Two types or more of *koji* molds having high isobutyric acid productivities and one type of *koji* mold having a low isobutyric acid productivity may also be employed. Alternatively, one type of *koji* mold having a high isobutyric acid productivity and two types or more of *koji* molds having low isobutyric acid productivities may be employed.

The amounts of *koji* mold having a high isobutyric acid productivity and *koji* mold having a low isobutyric acid productivity to be used for *koji*-making are not specifically limited. For example, the *koji* mold having a high isobutyric acid productivity and the *koji* mold having a low isobutyric acid productivity are mixed at a ratio of 20 to 80 : 80 to 20, preferably 40 to 60 : 60 to 40, and more preferably 45 to 55 : 55 to 45.

The above *koji* mold having a high isobutyric acid productivity and *koji* mold having a low isobutyric acid productivity are used in accordance with a normal process for producing a soy sauce *koji.* In a brief description, the seed *koji* as mentioned above may be inoculated in a normal raw material of *koji,* for example a raw material of soy sauce *koji* which is obtained by mixing water-sprayed and steam-cooked soybean raw material with roasted and milled wheat raw material, followed by *koji*-making (culturing) at about 25°C to 35°C for an appropriate period of time. At this time, the *koji* mold having a high isobutyric acid productivity and the *koji* mold having a low isobutyric acid productivity can be inoculated in a same raw material of soy sauce *koji,* either concurrently or after a fixed interval. Other *koji*-making conditions, such as the amount of *koji* mold to be used, the temperature, humidity, and time for culture, the mode of culture (such as continuous type or batch type), the aeration-ventilation condition, and the number of times and duration of stirring (*Teire*) are not specifically limited, and an appropriate and publicly known condition in the art can be selected.

The soy sauce *koji* obtained as mentioned above has a reduced content of isobutyric acid, which is thus a soy sauce *koji* having a reduced *Busho-shu.* According to the process of the present invention, the amount of isobutyric acid contained in a *koji* is reduced to about 50% or less, and preferably about 30% or less, as compared to a soy sauce *koji* obtained by a conventional production process. Moreover, a soy sauce *koji* obtained by the present invention is highly digestible, high in the glutamic acid content, and capable of producing a soy sauce having a high ratio (Glu/TN) of glutamic acid to the total nitrogen (TN).

Further, a soy sauce *koji* obtained by the present invention can be used for producing a soy sauce having a reduced *Busho-shu.* A soy sauce can be produced using a soy sauce *koji* produced as mentioned above, through a moromi mash fermentation process and a press-filtration process according to a usual method. Specifically, a soy sauce *koji* is incubated with an appropriate concentration of salt water at a normal ratio for incubation, followed by fermentation and aging for 3 to 6 months with appropriate stirring by a usual method, to obtain an aged moromi mash. Next, the aged moromi mash is wrapped in a nylon filter cloth and press-filtered by a squeezer to obtain a raw soy sauce. This raw soy sauce is subjected to pasteurization, clarification, and sediment-removal to obtain a soy sauce. There is no specific limitation in the types of lactic acid bacterium and yeast to be used for the moromi mash fermentation process, and any appropriate and publicly known ones in the art may be employed.

According to the present invention, for the production of a soy sauce *koji,* with use of a *koji* mold which produces a strong protease and provides a highly digestible *koji,* it is possible to avoid a risk in which a high concentration of a component for *Busho-shu* which is one of the unpleasant smells of soy sauce, namely isobutyric acid, accumulates in the *koji* during the *koji*-making, and to reliably obtain a soy sauce having a reduced *Busho-shu.* Moreover, according to the present invention, such a *Busho-shu,* which has been so far considered as unavoidable, can be reliably kept from being generated and accumulated during the *koji*-making, and the amount of isobutyric acid contained in the soy sauce is reduced to about 60% or less, for example, about 50%. Therefore, according to the present invention, a soy sauce having a reduced *Busho-shu* can be obtained. The process of the present invention enables to produce a soy sauce having a high glutamic acid content and an excellent aroma.

### Examples

The present invention is hereafter described in greater detail with reference to the following examples, although the technical scope of the present invention is not limited thereto.

### [Example 1] Process for producing soy sauce koji with use of mixed seed koji and measurement of isobutyric acid content

### (1) Use of mixed seed koji of Aspergillus sojae and Aspergillus oryzae

26 g of defatted soybeans is sprayed with 135 W/W% water. 28 g of wheat is roasted and milled, and the resultant is mixed with the thus obtained soybeans. The mixture is then put into a 2 liter Fernbach flask, followed by sterilization under pressure and heating at 121°C for 50 minutes. The resultant product was cooled down to a room temperature, and inoculated with 200 mg of mixed seed *koji* containing 100 mg of seed *koji* of *Aspergillus sojae* strain ATCC 46250 and 100 mg of seed *koji* of *Aspergillus oryzae* strain ATCC 22787. The flask was cotton-plugged and then was incubated in a thermostatic chamber at a room temperature of 30°C to start *koji*-making. After 16 hours, the Fernbach flask was shaken so as to remove the heat generated in the *koji* (mixing process called *"Teire"),* and then was transferred into a thermostatic chamber at a room temperature of 25°C. After 8 hours, the "*Teire*" was performed again to remove the heat generated in the *koji,* and then was transferred into a thermostatic chamber at a room temperature of 20°C. The *koji*-making was performed for 42 hours in total to obtain a soy sauce *koji* of the mixed seed *koji.*

The seed *koji* used herein was prepared by the following manner. 20 g of bran was sprayed with 80 W/W% water. 5 g of the above product was put into a 150 ml conical flask, followed by sterilization under pressure and heating at 121°C for 50 minutes. The resultant product was cooled down to a room temperature, and inoculated with 2 to 3 scoops of a platinum loop with a *koji* mold which had been previously pure-cultured and isolated. The flask was incubated in a thermostatic chamber at a temperature of 30°C for 72 hours (hereunder, the same manner was performed in comparative example and control example).

### (2) Comparative Example: Use of seed koji of Aspergillus sojae strain ATCC 46250

A soy sauce *koji* of comparative example was obtained in the exactly same manner as that of the above process for producing soy sauce *koji* (1), except for that "100 mg of seed *koji of Aspergillus sojae* strain ATCC 46250" was used instead of the "mixed seed *koji* containing 100 mg of seed *koji of Aspergillus sojae* strain ATCC 46250 and 100 mg of seed *koji of Aspergillus oryzae* strain ATCC 22787".

### (3) Control Example: Use of seed koji of Aspergillus oryzae strain ATCC 22787

A soy sauce *koji* of control example was obtained in the exactly same manner as that of the above process for producing soy sauce *koji* (1), except for that "100 mg of seed *koji of Aspergillus oryzae* strain ATCC 22787" was used instead of the "mixed seed *koji* containing 100 mg of seed *koji of Aspergillus sojae* strain ATCC 46250 and 100 mg of seed *koji of Aspergillus oryzae* strain ATCC 22787".

### (4) Measurement of isobutyric acid content

Regarding the abovementioned production examples for producing three types of soy sauce *koji* (1) to (3), the ups and downs of isobutyric acid contents in these *koji* were measured over time. The isobutyric acid content was measured by the following manner. 25g of soy sauce *koji* was added with 40 ml of saturated salt water, which was well shaken and left at a room temperature for 24 hours. Then, the resultant product was filtered with a filter paper. Thus obtained filtrate (soy sauce *koji* extract) was extracted with methyl acetate, and was subjected to the analysis by gas chromatography (GC) method without a concentration process.

The results are shown in Fig. 1, wherein the X axis indicates the time (hours) elapsed from the start of *koji*-making, and the Y axis indicates the isobutyric acid content (ppm) in soy sauce *koji.*

The results in Fig. 1 show that *Aspergillus sojae* strain ATCC 46250 (comparative example) produced 40 ppm or more of isobutyric acid in *koji* after 24 hours from the start of *koji*-making, and accumulated 130 ppm thereof at maximum. Moreover, it is also found that isobutyric acid was contained at a high concentration of 60 ppm after 42 hours (Fig. 1, a broken line with rhomboids).

On the other hand, *Aspergillus oryzae* strain ATCC 22787 (control example) produced a low concentration of the component for *Busho-shu* (isobutyric acid) at 10 ppm after 24 hours from the start of *koji*-making, and showed approximately zero value after 42 hours, which indicates the disappearance thereof (Fig. 1, a two-dot chain line with squares).

Moreover, it is also found that the use of the mixed seed *koji* having *Aspergillus sojae* strain ATCC 46250 and *Aspergillus oryzae* strain ATCC 22787 mixed at equal amounts was able to reduce the isobutyric acid content to about one-third as compared to the single use of *Aspergillus sojae* strain ATCC 46250 (comparative example) (Fig. 1, a solid line with triangles).

### (5) Properties of soy sauce koji

The moisture content, the pH, the amount of protease (U/g of *koji),* Glu/TN (ratio of glutamic acid to the total nitrogen content), and the digestibility of soy sauce *koji* of the mixed seed *koji* lot, the comparative example lot, and the control example lot that had been obtained by the above (1) to (3).

The pH and the protease amount (U/g of *koji)* were measured in accordance with the "Experimental Method for Soy Sauce" (THE JAPAN SOY SAUCE INSPECTION INSTITUTE).

The digestibility and Glu/TN were measured by the methods described below.

### (Method for measuring digestibility)

12 g of *Koji* was weighed, which was added with 62.5 ml of 12% salt water and 7.5 ml of toluene. The mixture was incubated to effect autodigestion at 37°C for 7 days. The resultant product was filtered with a filter paper. The digestibility was calculated by dividing the nitrogen concentration in the filtrate by the total nitrogen concentration (in the filtrate and the residual material on the filter paper).

### (Method for measuring Glu/TN)

The Glu/TN was calculated by dividing the glutamic acid concentration in the filtrate of the above *koji* digest liquid by the nitrogen concentration.

The results of the measurements carried out as mentioned above are shown in Table. 1 below.

**[Table 1]**

| Analytical values of *koji* | | | | | | |
|---|---|---|---|---|---|---|
| Lot | Characteristic | Moisture content [%] | pH | Protease [U/g of *koji*] | Glu/TN | Digestibility [%] |
| Comparative example lot | *A. sojae* ATCC 46250 | 44.2 | 7.23 | 261 | 0.67 | 82.7 |
| Control example lot | *A. oryzae* ATCC 22787 | 44.8 | 6.95 | 139 | 0.55 | 78.7 |
| Mixed seed *koji* lot | Mixed seed *koji* mold | 45.7 | 7.19 | 248 | 0.61 | 84.2 |

From the results of Fig. 1 and Table 1, it is found that the soy sauce *koji* of the comparative example lot using *A. sojae* alone (after 24 hours from the start of *koji-*making) has advantages of being very high in the protease activity, high in the ratio (Glu/TN) of glutamic acid (Glu) to the total nitrogen (TN), and high in the digestibility, while it conversely has a disadvantage of being very high in the concentration of isobutyric acid which is a causative component for *Busho-shu.*

Meanwhile, it is found that the soy sauce *koji* of the control example lot using A. *oryzae* alone (same as the above) is very low in the concentration of isobutyric acid which is a causative component for *Busho-shu,* while it has disadvantages of being low in both the protease activity and the ratio (Glu/TN) of glutamic acid (Glu) to the total nitrogen (TN).

On the other hand, it is found that the soy sauce *koji* of the mixed seed *koji* lot using a mixture of *A. sojae* and *A. oryzae* (same as the above) has characteristics of being high in all of the protease activity, the ratio (Glu/TN) of glutamic acid (Glu) to the total nitrogen (TN), and the digestibility, being low in the isobutyric acid content which is the most important factor, and thus having less *Busho-shu,* and that such a *koji* is therefore very useful for brewing a soy sauce.

### [Example 2] Process for producing soy sauce

### (1) Production of soy sauce with use of soy sauce koji obtained by using mixed seed koji

300 g of defatted soybeans is sprayed with 150 W/W% water. 300 g of wheat is roasted and milled, and the resultant is mixed with the thus obtained soybeans. The mixture is then subjected to sterilization under pressure and heating at 121°C for 50 minutes. The resultant product was cooled down to a room temperature, and inoculated with 2 g of mixed seed *koji* containing 1 g of seed *koji* of *Aspergillus sojae* strain ATCC 46250 and 1 g of seed *koji* of *Aspergillus oryzae* strain ATCC 22787. The product was filled in a flat wooden *koji* cover having a length of 58 cm, a width of 30 cm, and a depth of 6 cm.

This cover was placed in a thermostatic chamber at a room temperature of 30°C to start *koji*-making. The production of the seed *koji* was carried out in the same manner as that of the Example 1 (1).

After 16 hours, the product was agitated by hand *("Teire")* so as to remove the heat generated in the *koji*, and then was transferred into a thermostatic chamber at a room temperature of 25°C. After 8 hours, the "*Teire*" was performed again to remove the heat generated in the *koji,* and then was transferred into a thermostatic chamber at a room temperature of 20°C. The *koji*-making was performed for 30 hours in total to obtain a soy sauce *koji* of the mixed seed *koji.*

0.9 kg of thus obtained soy sauce *koji* was added with 1.4 liter of salt water. The mixture was placed in a small tank for incubation targeting a salt concentration of about 16 %, followed by controlling of the moromi mash for 5 months in accordance with a normal process for producing a soy sauce *koji,* and thereby an aged soy sauce moromi mash was obtained.

In order to accelerate lactic acid fermentation and alcohol fermentation, a lactic acid bacterium (*Tetragenococcus halophilus*) isolated from the soy sauce moromi mash was added at 1 × 10⁵ c.f.u./g of moromi mash on 14th day of the incubation, and a yeast *(Zygosaccahromyces rouxii)* isolated from the soy sauce moromi mash was added at 1 × 10⁵ c.f.u./g of moromi mash on 35th day of the incubation.

This aged soy sauce moromi mash was press-filtered by a small squeezer to obtain a raw soy sauce. This soy sauce was pasteurized at 80°C for 30 minutes and cooled down to a room temperature. The resultant soy sauce was left still for 2 days, and sediments were removed therefrom to obtain a clear soy sauce with less *Busho-shu.*

### (2) Comparative example lot

A soy sauce of comparative example lot was obtained in the exactly same manner as that of the above process for producing soy sauce in (1), except for that "1 g of seed *koji* of *Aspergillus sojae* strain ATCC 46250" was used instead of "2 g of the mixed seed *koji* containing 1 g of seed *koji* of *Aspergillus sojae* strain ATCC 46250 and 1 g of seed *koji* of *Aspergillus oryzae* strain ATCC 22787".

### (3) Control example lot

A soy sauce of control example lot was obtained in the exactly same manner as that of the above process for producing soy sauce in (1), except for that "1 g of seed *koji* of *Aspergillus oryzae* strain ATCC 22787" was used instead of "2 g seed *koji* containing 1 g of seed *koji* of *Aspergillus sojae* strain ATCC 46250 and 1 g of seed *koji* of *Aspergillus oryzae* strain ATCC 22787".

### (4) Component analysis of soy sauce

Each soy sauce of the mixed seed *koji* lot, the comparative example lot, and the control example lot produced in the above (1) to (3) was subjected to component analysis of raw soy sauce, followed by sensory evaluation of flavor of pasteurized and aged soy sauce.

The component analysis of soy sauce, that is to say, the measurement of NaCl, TN (total nitrogen), Glu (glutamic acid), Glu/TN, RS (direct reducing sugar), Alc (alcohol), Lac (lactic acid), pH, and Col (color number) in a soy sauce was in accordance with the "Experimental Method for Soy Sauce" (THE JAPAN SOY SAUCE INSPECTION INSTITUTE). Greater color numbers mean lighter colors. The digestibility was obtained by the following manner. 10 g of moromi mash was filtered with a filter paper, and then calculation was performed by dividing the "nitrogen concentration in the filtrate" by the "total nitrogen amount in the filtrate and the residual material on the filter paper". The isobutyric acid content was obtained by the following manner. The soy sauce was directly extracted as it was with methyl acetate, and was subjected to the analysis by gas chromatography (GC) method without a concentration process (see "Analysis of Aroma Components by Gas Chromatography" edited and written by THE JAPAN SOY SAUCE INSPECTION INSTITUTE, Association of Experimental Method for Soy Sauce, issued on Mar 1, 1985, pp. 177 to 179).

The discrimination test and the preference test were performed by the method of three-point discrimination and preference test (referred to as triangle test) (see "Method of Sensory Evaluation" edited and written by THE JAPAN SOY SAUCE INSPECTION INSTITUTE, Association of Experimental Method for Soy Sauce, issued on Mar 1, 1985, pp. 117 to 118). This method enables to perform both discrimination test and preference test in a single examination. First, a set consisting of three samples was prepared by selecting two samples from one type of sample, and one sample from another type of sample. In the discrimination test, one sample (different type from other two samples) was selected among three samples, followed by the preference test where comparison was performed between one selected sample and other two samples in terms of preference.

Table 2 shows the analytical values of the raw soy sauce components. Table 3 shows the results of the sensory evaluation. Table 4 shows the results of discrimination and preference tests.

**[Table 2]**

| Analytical values of raw soy sauce components | | | | | | | | | | | |
|---|---|---|---|---|---|---|---|---|---|---|---|
| Lot | Characteristic | NaCl [%] | TN [%] | Glu [%] | Glu/TN | RS [%] | Alc [%] | Lac [%] | pH | Col | Digestibility [%] |
| Comparative example lot | *A. sojae* ATCC 46250 | 16.25 | 1.81 | 1.10 | 0.61 | 2.72 | 3.85 | 0.79 | 4.88 | 31 | 81.4 |
| Control example lot | *A. oryzae* ATCC 22787 | 16.85 | 1.91 | 1.00 | 0.53 | 3.43 | 3.01 | 1.29 | 4.71 | 20 | 79.2 |
| Mixed seed *koji* lot | Mixed *koji* mold of *A. sojae* and *A. oryzae* | 16.33 | 1.88 | 1.26 | 0.67 | 2.76 | 3.63 | 0.87 | 4.92 | 28 | 81.1 |

**[Table 3]**

| Results of sensory evaluation | | | |
|---|---|---|---|
| Lot | Characteristic | Isobutyric acid (ppm) | Evaluation |
| Comparative example lot | ATCC46250(A. sojae) | 20.4 | unpleasant smell |
| Control example lot | ATCC22787(A. oryzae) | 10.8 | Excellent |
| Mixed seed *koji* lot | Mixed *koji* mold | 11.1 | Excellent |

**[Table 4]**

| Results of discrimination and preference | | | | |
|---|---|---|---|---|
| Lot | Number of panelists | Discrimination test Number of correct answers | Judgment | Preference test Number of preference among panelists who gave correct answers |
| Comparative example lot | 14 | 11 | * | 0 |
| Control example lot | | | | 11 |
| Mixed seed *koji* lot | 17 | 5 | - | 3 |
| Control example lot | | | | 2 |

| | | | | |
|---|---|---|---|---|
| The mark * means a significance of 1%. | | | | |

As shown in Table 2, it is found that the comparative example lot, the control example lot, and the mixed seed *koji* lot provided almost equivalently excellent soy sauce in terms of the quality.

Moreover, as shown in Table 3, it is found that, in the results of the sensory evaluation, *Busho-shu* was felt in the comparative example lot from which about 20 ppm of isobutyric acid concentration had been detected, while the aroma was excellent in both the control example lot and the mixed seed *koji* lot from which about 10 ppm of isobutyric acid concentration had been detected.

Further, as shown in Table 4, it is found that, in the discrimination test, the comparative example lot and the control example lot were discriminated at a significance of 1%, and the comparative example lot was prone to be disliked. On the other hand, it is found that the mixed seed *koji* lot and the control example lot were not discriminated.

From the above result, it is understood that, according to the present invention, even with use of a *koji* mold having a high isobutyric acid productivity, a soy sauce having less unpleasant smell can be obtained by *koji*-making in which another *koji* mold having a low isobutyric acid productivity is additionally mixed therewith.

All publications, patents, and patent applications cited herein are incorporated herein by reference in their entirety.

### Industrial Applicability

According to the present invention, a soy sauce *koji* and a soy sauce having reduced *Busho-shu* can be reliably produced. Moreover, a soy sauce having a high digestibility of *koji,* and a high content of glutamic acid can be produced, and thus a soy sauce having excellent soy sauce components and an excellent aroma can be produced.

## Claims

1. A process for producing a soy sauce *koji* having a reduced *Busho-shu,* wherein *koji*-making is performed by inoculating a seed *koji* mold belonging to the genus *Aspergillus* which produces a high concentration of isobutyric acid during the *koji*-making and a seed *koji* mold belonging to the genus *Aspergillus* which does not produce, or produces a low concentration of isobutyric acid during the *koji*-making, into a same raw material of soy sauce *koji.*

2. The process according to claim 1, wherein the *koji* mold belonging to the genus *Aspergillus* which produces a high concentration of isobutyric acid during *koji*-making is a *koji* mold which produces isobutyric acid at a double amount or more after 24 or 30 hours from the start of *koji*-making, as compared with the amount of isobutyric acid produced after 20 hours from the start of the *koji*-making.

3. The process according to claim 1 or 2, wherein the *koji* mold belonging to the genus *Aspergillus* which produces a high concentration of isobutyric acid during *koji*-making is a *koji* mold which produces 40 ppm or more of isobutyric acid after 24 or 30 hours from the start of the *koji*-making, when *koji*-making is performed under the following condition (A):
*Koji*-making condition (A):
26 g of defatted soybeans is sprayed with 135 W/W% water. 28 g of wheat is roasted and milled, and the resultant is mixed with the thus obtained soybeans. The mixture is then put into a 2 liter Fernbach flask, followed by sterilization under pressure and heating at 121°C for 50 minutes; the resultant product is cooled down to a room temperature, and inoculated with 100 mg of bran seed *koji;* the flask is cotton-plugged and then is incubated in a thermostatic chamber at a room temperature of 30°C to start *koji*-making; after 16 hours, the Fernbach flask is shaken so as to remove the heat generated in the *koji* (mixing process called *"Teire"*), and then is transferred into a thermostatic chamber at a room temperature of 25°C; after 8 hours, the *"Teire"* is performed again to remove the heat generated in the *koji,* and then is transferred into a thermostatic chamber at a room temperature of 20°C; and the *koji*-making is performed for 42 hours in total to obtain a *koji.*

4. The process according to any one of claims 1 to 3, wherein the *koji* mold belonging to the genus *Aspergillus* which produces a high concentration of isobutyric acid during *koji*-making is *Aspergillus sojae.*

5. The process according to any one of claims 1 to 4, wherein the *koji* mold belonging to the genus *Aspergillus* which produces a high concentration of isobutyric acid during *koji*-making is *Aspergillus sojae* strain ATCC 46250.

6. The process according to claim 1, wherein the *koji* mold belonging to the genus *Aspergillus* which does not produce, or produces a low concentration of isobutyric acid during *koji*-making is a *koji* mold which produces isobutyric acid at a reduced amount, or no isobutyric acid at all, after 24 or 30 hours from the start of *koji*-making, as compared with the amount of isobutyric acid produced after 20 hours from the start of the *koji*-making.

7. The process according to claim 1 or 6, wherein the *koji* mold belonging to the genus *Aspergillus* which does not produce, or produces a low concentration of isobutyric acid during *koji*-making is a *koji* mold which produces 20 ppm or less of isobutyric acid after 24 or 30 hours from the start of the *koji*-making, when a *koji*-making is performed under said condition (A).

8. The process according to any one of claims 1, 6, or 7, wherein the *koji* mold belonging to the genus *Aspergillus* which does not produce, or produces a low concentration of isobutyric acid during *koji*-making is *Aspergillus oryzae.*

9. The process according to any one of claims 1, 6, 7, or 8, wherein the *koji* mold belonging to the genus *Aspergillus* which does not produce, or produces a low concentration of isobutyric acid during *koji*-making is *Aspergillus oryzae* strain ATCC 22787.

10. A soy sauce *koji* produced by the process according to any one of claims 1 to 9 and having a reduced *Busho-shu.*

11. A process for producing a soy sauce having a reduced *Busho-shu,* wherein a soy sauce *koji* produced by the process according to any one of claims 1 to 9 is mixed with a salt water to produce a soy sauce moromi mash, followed by fermentation and aging.

12. A soy sauce produced by the process according to claim 11 and having a reduced *Busho-shu.*
